# EUROPÄISCHE PATENTANMELDUNG

(11) **EP 0 942 502 A1**
(43) Veröffentlichungstag der Anmeldung: **15.09.1999**
(21) Anmeldenummer: 99104507.1
(22) Anmeldetag: 06.03.1999
(51) Int. Cl.: H02B 1/052

(54) **Vorrichtung zur Befestigung eines elektrischen Gerätes auf einer Tragschiene**

(30) Priorität: 09.03.1998 DE 29804153 U
(71) Anmelder: Moeller GmbH, 53115 Bonn (DE)
(72) Erfinder: Dauer, Klaus, 56075 Koblenz (DE); Nürenberg, Klaus Dieter, 53639 Königswinter (DE); Gantze, Holger, 56626 Andernach-Eich (DE)

(57) **Zusammenfassung**

Eine Vorrichtung zur Befestigung eines elektrischen Gerätes auf einer Tragschiene, bestehend aus einer Grundplatte, zumindest einem unter Federdruck stehenden Schieber auf der einen Seite und auf der anderen Seite mindestens einem Rastvorsprung, wobei der Schieber aus einem gebogenen Blechteil besteht, der federnd gelagert und mit Klemmschrägen zum Festklemmen an die Tragschiene versehen ist, wobei der Schieber aus zwei Seitenschenkeln und einem Basisschenkel besteht und im wesentlichen trapezförmig geformt ist, wobei die Schenkelenden der Seitenschenkel in Richtung der Grundplatte angeordnet sind, soll eine sichere und rutschfreie Montage von elektrischen Geräten, wie Schütze, Motorschutzschalter, Leistungsschalter oder SPS, ermöglichen und den beschriebenen Anforderungen dieser Geräte Rechnung tragen.
Dies wird dadurch erreicht, daß die Tragschiene (15) derart in dem Schieber (1) vollständig gehalten ist, daß zum einen eine seitliche Verschiebung verhindert wird und zum anderen der Schieber (1) in Hubrichtung frei beweglich ist, wobei an den Seitenschenkeln (2) jeweils ein dreieckförmiger Einschnitt (4) gestanzt ist, wobei die Tragschienenkante von jedem Seitenschenkel (2) mit zwei Kanten (12,13) geklemmt wird.

## Beschreibung

Die Erfindung betrifft eine Vorrichtung nach dem Oberbegriff des Anspruches 1.

Aus der DE 44 22 021 A1 und DE 295 06 579 U1 sind beispielsweise derartige Vorrichtungen bekannt.

Bei derartigen Vorrichtungen bzw. Clipsverbindungen ist es erwünscht, daß die Montage und Demontage z.B. von Schaltgeräten auf Hutschienen ohne Werkzeuge möglich ist. In vielen Fällen, insbesondere bei einer vertikalen Montage, wird gefordert, daß die Geräte auch bei hohen seitlichen Verschiebekräfte rutschfrei befestigt sind.

Zusätzlich muß die Vorrichtung den unterschiedlichen Geräteverhältnissen Rechnung tragen. Unterschiedliche Hutschienen sowie deren großes Toleranzfeld darf keinen Einfluß auf die sichere Funktion, bzw. Befestigung haben. Bei der montierenden Person muß das subjektive Montageverhalten erhalten bleiben.

Aus der FR 22 02 240 ist eine derartige Vorrichtung bekannt, bei der mit Hilfe eines unter Federdruck stehenden Schiebers aus Blech die Tragschiene eingeklemmt wird. Der Schieber weist zwei schräg geformte Kanten auf, die einen sicheren Halt bewirken.

Aufgabe der Erfindung ist es, ein Vorrichtung nach dem Oberbegriff des Anspruches 1 zu schaffen, die eine sichere und rutschfreie Montage von elektrischen Geräten, wie Schütze, Motorschutzschalter, Leistungsschalter oder SPS, ermöglicht und den beschriebenen Anforderungen Rechnung trägt.

Die Aufgabe der Erfindung wird durch die kennzeichnenden Merkmale des Anspruches 1 gelöst, während in den Unteransprüchen besonders vorteilhafte Weiterbildungen der Erfindung gekennzeichnet sind.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine perspektivische Darstellung des Gerätes von der Unterseite,
- Fig. 2: eine perspektivische Darstellung des Schiebers,
- Fig. 3: eine Blechabwicklung des Schiebers,
- Fig. 4: eine Schnittdarstellung des Schiebers entlang der Schnittlinie A-A,
- Fig. 5: eine Darstellung des Schiebers von oben,
- Fig. 6: eine Schnittdarstellung des Schiebers von der Seite entlang der Schnittlinie B-B,

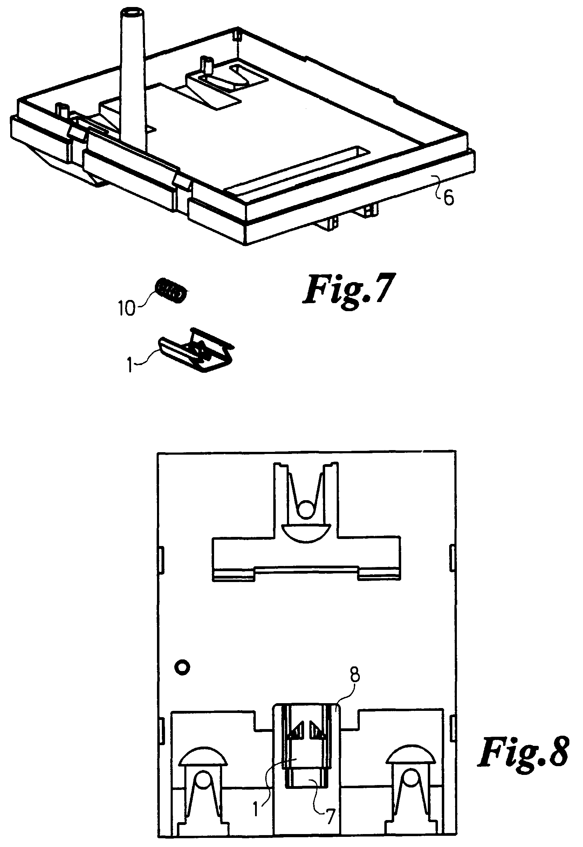

- Fig. 7: eine perspektivische Darstellung der Grundplatte von oben mit auseinandergezogenem Schieber,
- Fig. 8: eine Darstellung der Grundplatte von unten,

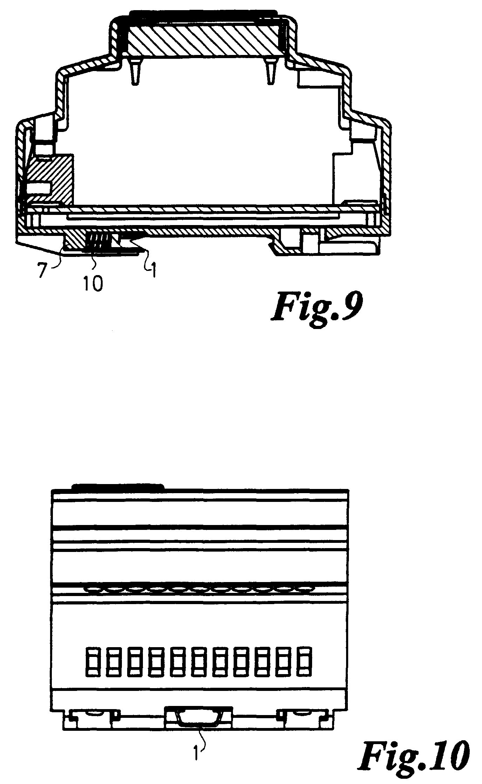

- Fig. 9: eine Schnittdarstellung des Gerätes und
- Fig. 10: eine Darstellung des Gerätes von oben.

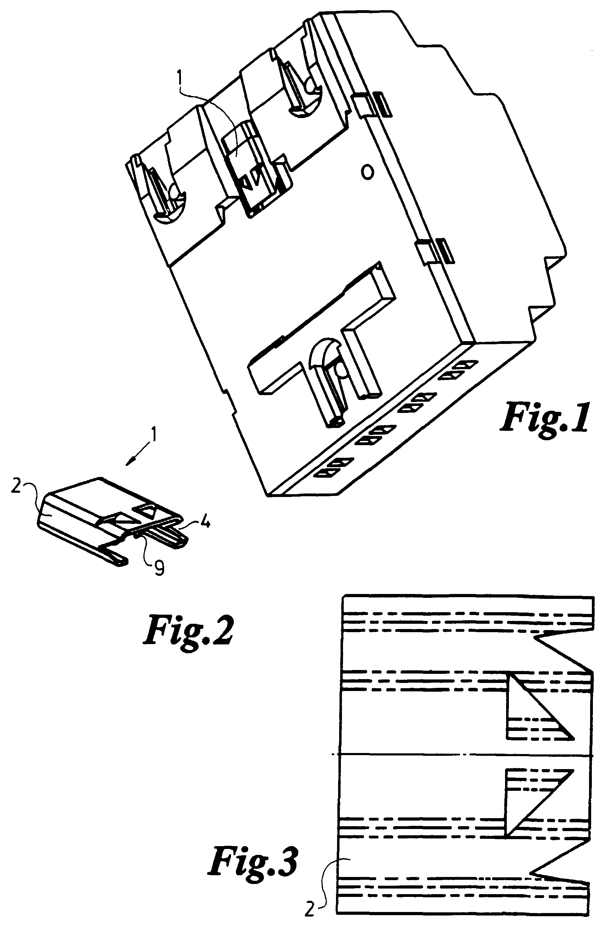

Die Fig. 1 zeigt ein Logik-Modul zum Aufschnappen auf einer Tragschiene, die auch als Hutschiene bekannt ist. oberhalb und unterhalb der Tragschiene sind auf einer Grundplatte 6 Haltenasen 14 bzw. Rastvorsprünge angeformt.

Die Vorrichtung zur Befestigung besteht aus einem unter Federdruck stehenden Schieber 1, wobei der Schieber 1 aus einem gebogenen Blechteil, der federnd gelagert und mit Klemmschrägen bzw. Kanten 12,13 zum Festklemmen an die Tragschiene versehen ist.

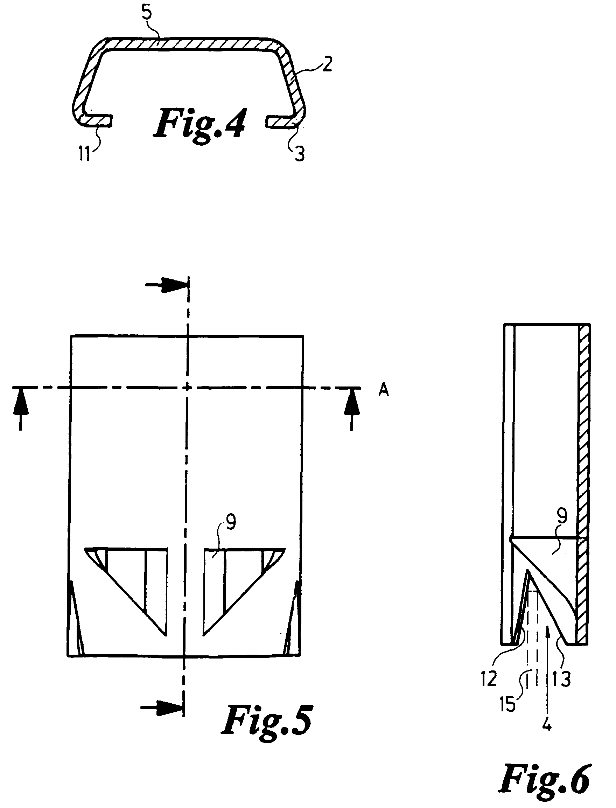

Der Schieber 1 besteht aus zwei Seitenschenkeln 2 und einem Basisschenkel 5 und ist im wesentlichen trapezförmig geformt, wie Fig. 4 zeigt.
Die Schenkelenden 3 der Seitenschenkel 2 sind in Richtung der Grundplatte angeordnet.
An den Seitenschenkeln 2 ist jeweils ein dreieckförmiger Einschnitt 4 gestanzt, der insbesondere in Fig. 6 deutlich erkennbar ist, wobei die Tragschienenkante von jedem Seitenschenkel 2 mit zwei Kanten 12,13 geklemmt wird, wobei die Tragschiene strichpunktiert und mit 15 gekennzeichnet ist.

Dadurch daß der dreieckförmige Einschnitt 4 derart gestanzt ist, daß der Stanzgrad im gebogenen Zustand des Schiebers 1 innenliegend angeordnet ist, entsteht ein besonders guter Halt.

Die Einschnitte 4 sind asymmetrisch geformt, d.h. die Kanten 12,13 berühren die Tragschiene 15 mit einem unterschiedlichen Winkel.

Der Führungsblock 7 ist in einer Vertiefung 8 angeordnet, wobei der Schieber 1 in einem an der Grundplatte 6 angeformten Führungsblock 7 gehalten ist, derart daß der Schieber 1 im montierten Zustand gegen die Wand der Vertiefung anschlägt und so gegen ein Herausfallen gesichert ist. Der Schieber 1 stützt sich an dem Führungsblock 7 mit einer zwischenliegenden Feder 10 ab.

An den Schieber 1 sind Anschlagnasen 9 herausgedrückt, die zum Abstützen der Feder 10 vorgesehen sind.
An den Schenkelenden des Schiebers 1 sind parallel zur Grundplatte 6 verlaufende Abschnitte 11 vorhanden, die nach innen gebogenen sind.

Die Vorrichtung ist zur Befestigung von einem Niederspannungs-Schaltgerät, einer Speicherprogrammierbaren Steuerung, einer Kleinsteuerung oder einem Logik-Modul vorgesehen.

Bei Geräten, die besonders breit sind, können auch mehrere Schieber angeordnet sein.

### Liste der Bezugszeichen

Schieber 1
Seitenschenkel 2
Schenkelenden 3
Einschnitt 4
Basisschenkel 5
Grundplatte 6
Führungsblock 7
Vertiefung 8
Anschlagnasen 9
Feder 10
Abschnitte 11
Kanten 12,13
Haltenasen 14
Tragschiene 15

## Patentansprüche

1. Vorrichtung zur Befestigung eines elektrischen Gerätes auf einer Tragschiene, bestehend aus einer Grundplatte, mindestens einem unter Federdruck stehenden Schieber und mindestens einem Rastvorsprung, wobei der Schieber aus einem gebogenen Blechteil besteht, der federnd gelagert und mit Klemmschrägen zum Festklemmen an die Tragschiene versehen ist, wobei der Schieber aus zwei Seitenschenkeln und einem Basisschenkel besteht und im wesentlichen trapezförmig geformt ist, wobei die Schenkelenden der Seitenschenkel in Richtung der Grundplatte angeordnet sind, **dadurch gekennzeichnet,** daß die Tragschiene (15) derart in dem Schieber (1) vollständig gehalten ist, daß zum einen eine seitliche Verschiebung verhindert wird und zum anderen der Schieber (1) in Hubrichtung frei beweglich ist.

2. Vorrichtung nach Anspruch 1, dadurch gekennzeichnet, daß daß an den Seitenschenkeln (2) jeweils ein dreieckförmiger Einschnitt (4) gestanzt ist, wobei die Tragschienenkante von jedem Seitenschenkel (2) mit zwei Kanten (12,13) geklemmt wird.

3. Vorrichtung nach Anspruch 1, dadurch gekennzeichnet, daß ein dreieckförmiger Einschnitt (4) derart gestanzt ist, daß der Stanzgrad im gebogenen Zustand des Schiebers innenliegend angeordnet ist.

4. Vorrichtung nach Anspruch 1 oder 2, dadurch gekennzeichnet, daß die Einschnitte (4) asymmetrisch geformt sind, derart daß die zwei auf die Tragschiene aufliegenden Kanten (12,13) der Seitenschenkel einen unterschiedlichen Auflagewinkel aufweisen.

5. Vorrichtung nach einem der vorhergehenden Ansprüche, dadurch gekennzeichnet, daß der Schieber in einem an der Grundplatte (6) angeformten Führungsblock (7) gelagert ist, daß der Führungsblock (7) in einer Vertiefung (8) angeordnet ist, wobei der Schieber (1) durch die Vertiefung (8) gegen herausfallen gesichert ist und daß sich an dem Führungsblock eine Feder (10) abstützt.

6. Vorrichtung nach einem der vorhergehenden Ansprüche, dadurch gekennzeichnet, daß aus dem Schieber (1) Anschlagnasen (9) herausgedrückt sind, die zum Abstützen einer Feder (10) vorgesehen sind.

7. Vorrichtung nach einem der vorhergehenden Ansprüche, dadurch gekennzeichnet, daß an den Schenkelenden des Schiebers (1) parallel zur Grundplatte (6) verlaufende Abschnitte (11) vorhanden sind.

8. Vorrichtung nach einem der vorhergehenden Ansprüche, dadurch gekennzeichnet, daß an den Schenkelenden des Schiebers (1) nach innen gebogene Abschnitte (11) vorhanden sind.

9. Vorrichtung nach einem der vorhergehenden Ansprüche, dadurch gekennzeichnet, daß die Vorrichtung in einem Niederspannungs-Schaltgerät, einer Speicherprogrammierbaren Steuerung, einer Kleinsteuerung oder einem Logik-Modul angeordnet ist.
